(19) Europäisches Patentamt
European Patent Office
Office européen des brevets

(11) **EP 2 562 676 B1**

(12) **EUROPÄISCHE PATENTSCHRIFT**

(45) Veröffentlichungstag und Bekanntmachung des Hinweises auf die Patenterteilung:
**05.03.2014  Patentblatt 2014/10**

(51) Int Cl.:
***G06K 7/00*** *(2006.01)*    ***G06K 7/10*** *(2006.01)*

(21) Anmeldenummer: **11006951.5**

(22) Anmeldetag: **25.08.2011**

(54) **Verfahren und Schreib-Lesegerät für eine Anordnung mit einer Mehrzahl berührungslos auslesbarer Transponder**

Method and read/write device for an assembly with a number of contactless readable transponders

Procédé et appareil de lecture-écriture pour un agencement doté d'une multitude de transpondeur lisibles sans contact

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.02.2013  Patentblatt 2013/09**

(73) Patentinhaber: **Siemens Aktiengesellschaft 80333 München (DE)**

(72) Erfinder:
• **Horst, Dieter
  90556 Cadolzburg (DE)**
• **Neidig Jörg, Dr.
  90403 Nürnberg (DE)**
• **Weinländer, Markus
  91230 Happurg (DE)**

(56) Entgegenhaltungen:
**WO-A1-2009/055839**

**Beschreibung**

Die Erfindung betrifft ein Verfahren für ein Schreib-Lesegerät in einer Anordnung mit einer Mehrzahl berührungslos auslesbarer Transponder gemäß dem Oberbegriff des Patentanspruchs 1, und einen Schreib-Lesegerät zur Ausführung des Verfahrens gemäß dem Oberbegriff des Patentanspruchs 4.

Mittels der RFID-Technologie (RFID = Radio Frequency Identification) werden RFID-Etiketten, die meist als Transponder oder "Tags" bezeichnet werden, durch Schreib-Lesegeräte ("Reader") berührungslos erfasst und ausgelesen. Meist werden die Transponder dabei durch ein elektromagnetisches Feld, welches durch ein Schreib-Lesegerät durch Aussenden einer Trägerwelle mit einer ausreichenden Sendeleistung erzeugt wird, aktiviert und zumeist auch mit Energie versorgt (passive Transponder), wobei jedoch auch Ausführungsformen bekannt sind, bei denen die Energieversorgung des Transponders durch eine eigene Stromversorgung, beispielsweise Batterien, bewerkstelligt wird (aktive Transponder).

Die RFID-Technologie wird zumeist dort benutzt, wo Objekte, beispielsweise Werkstücke, Versandstücke etc. im Umfeld eines Schreib-Lesegerätes eindeutig über Funk erfasst und identifiziert werden sollen. Dazu kann ein Schreib-Lesegerät Informationen, die zumindest eine eindeutige Identifizierungsnummer umfassen, über Funk auf den Transponder speichern und wieder auslesen. In einer Arbeitsumgebung, insbesondere in industriellen Automatisierungsanordnungen, ist dabei das Schreib-Lesegerät regelmäßig an eine Steuerungseinheit (Industriesteuerung "PLC" oder Personal-Computer) angeschlossen.

Insbesondere beim Einsatz der RFID-Technologie in industriellen Produktionsanlagen ist es häufig gefordert, genau dasjenige Objekt und damit genau denjenigen Transponder, welcher sich in unmittelbarer Nähe des Schreib-Lesegerätes befindet, eindeutig zu identifizieren, um daraufhin entsprechende Fertigungsschritte daran durchzuführen etc. Andererseits werden in solchen industriellen Automatisierungsumgebungen häufig sog. Fernfeld-RFID-Systeme eingesetzt, die typischer Weise eine Erfassung von Transpondern im Umkreis von mehreren Metern um ein Schreib-Lesegerät herum ermöglichen. In dichtgepackten Umgebungen, wenn also mehrere Objekte mit ihren zugehörigen Transpondern nahe beieinander angeordnet sind, kommt es häufig vor, dass ein RFID-Schreib-Lesegerät in seinem Erfassungsbereich gleichzeitig mehrere Transponder erfasst, d.h., dass zusätzlich zu dem zum Schreib-Lesegerät bzw. dessen Antenne nächstliegenden Transponder noch weitere Transponder erfasst werden. Eine eindeutige Zuordnung des zu diesem Zeitpunkt zu bearbeitenden oder zu hantierenden Objektes ist dabei nicht mehr möglich, so dass Fehler in nachgelagerten Prozessen auftreten können.

Zur Lösung des Problems ist es bekannt, die Sendeleistung des Schreib-Lesegerätes soweit zu reduzieren, dass aufgrund der mit der Reduzierung der Sendeleistung verbundenen geringeren Reichweite nur maximal ein einziger Transponder erkannt wird. Als nachteilig hat sich dabei erwiesen, dass dabei die Sendeleistung so weit absinkt oder abgesenkt werden muss, dass in vielen Fällen der gewünschte ("richtige") Transponder nicht mehr zuverlässig erfasst bzw. erkannt werden kann. Insbesondere in den Fällen, in denen prozessbedingt zwischen dem Lesen und dem Schreiben von Daten desselben Transponders eine längere Zeitspanne liegt, ist nicht gewährleistet, dass zu beiden Zeitpunkten der "richtige" Transponder klar erkannt/erfasst wird und eine eindeutige Kommunikation mit diesem Transponder jeweils möglich ist.

Eine ähnliche Lösung, die oft mit einer beschriebenen Reduzierung der Sendeleistung einhergeht, liegt darin, den Funkbereich mit Dämmplatten und Reflektoren derart auszugestalten, dass der Funkbereich auf die entsprechende Arbeitsstation beschränkt ist und somit die unerwünschte Erfassung fernliegender Objekte und deren Transponder unterbleibt. Dies ist jedoch im Einzelfall oft schwierig zu bewerkstelligen und führt oft zu hohen Kosten.

Eine andere Strategie zur Lösung des Problems liegt darin, die gleichzeitige Erfassung und den gleichzeitigen Betrieb einer Kommunikationsbeziehung mit mehreren Transpondern zu erlauben, wobei mittels einer Steuerungseinrichtung, mit der das Schreib-Lesegerät verknüpft ist, eine entsprechende Auswertelogik realisiert wird, mit der die Vielzahl an gleichzeitig bestehenden Kommunikationsbeziehungen verwaltet wird und mit der anhand der erfassten Identifizierungsnummern und der Prozesslogik sichergestellt wird, dass an einer entsprechenden Verarbeitungsstation o.ä. die dem "richtigen", (sprich: meist dem nächstliegenden) Transponder zugeordneten Arbeitsvorgänge durchgeführt werden. Dies hat jedoch zum Nachteil, dass die entsprechende Verarbeitungslogik zur Verwaltung mehrer Kommunikationsbeziehungen in der Logik einer Prozesssteuerung integriert sein muss, wobei es sich oft auch um proprietäre Ansätze handelt, die in einer entsprechenden Steuerungseinrichtung jeweils situationsangepasst realisiert werden müssen.

Die Druckschrift WO 2009/055839 A1 - Laviale et al. "Object singulation process" offenbart ein Verfahren, bei dem eine Anzahl Transponder erfasst werden, wobei Charakteristika der dabei empfangenen Signale zur Gruppierung und Selektion der Transponder verwendet werden.

Es ist also eine Aufgabe der vorliegenden Erfindung, ein Verfahren und ein Schreib-Lesegerät anzugeben, mit dem in Anordnungen, in denen sich eine Mehrzahl von Transpondern im Funkbereich eines Schreib-Lesegerätes befindet, eine eindeutige Bestimmung eines bestimmten, nächstliegenden der Transponder möglich ist.

Es ist dabei eine Kernidee der Lösung des Problems, mittels des Schreib-Lesegerätes die im Funkbereich des Schreib-Lesegerätes befindlichen Transponder mehrfach zu erfassen - man spricht auch von einem mehrfachen Durchführen des "Inventories" -, wobei jeweils neben den erkannten (erfassten) Transpondern auch jeweils zu jedem der Transponder Zusatzangaben gespeichert werden, nämlich Merkmale der Funkverbindung, beispielsweise die jeweils gemessene Empfangsfeldstärke (RSSI - Received Signal Strange Indication), die Sendeleistung des Schreib-Lesegerätes beim jeweiligen Vorgang, die verwendete Antenne (bei Schreib-Lesegeräten mit mehreren Antennen), die Erfassungszeit (Zeitstempel) etc. Diese Merkmale werden für jeden der erfassten Transponder statistisch aufbereitet bzw. zusammengefasst und anschließend anhand vorab ermittelter oder eingespeicherter Filterkriterien bewertet, wobei ein Transponder nur dann als gültig erfasst gilt, wenn seine statistisch aufbereiteten bzw. zusammengefassten Merkmale vorab festgelegte Grenzwerte erfüllen.

Die Aufgabe wird insbesondere durch ein Verfahren gemäß dem Patentanspruch 1 und durch ein Schreib-Lesegerät gemäß dem Patentanspruch 4 gelöst.

Dabei wird ein Verfahren für ein Schreib-Lesegerät in einer Anordnung mit einer Mehrzahl berührungslos auslesbarer Transponder vorgeschlagen, wobei jeder der Transponder eine eindeutige Identifizierungsnummer aufweist, wobei das Schreib-Lesegerät mit einer industriellen Steuerungseinrichtung verbunden ist, und wobei in einer Erkennungsphase mehrere der Transponder von dem Schreib-Lesegerät erfasst werden. In der Erkennungsphase werden zumindest zwei der Transponder mehrfach erfasst, wobei bei jeder Erfassung jedes Transponders jeweils dessen Identifizierungsnummer und eine Anzahl von Merkmalen (RSSI, SL, ANT, TIME) über diesen Erfassungsvorgang registriert werden, wobei in einer Auswertephase für jeden der erfassten Transponder die Merkmale jeweils statistisch ausgewertet werden, wobei für jeden der Transponder statistische Größen ermittelt werden, wobei die ermittelten statistischen Größen der Transponder jeweils anhand Filterkriterien gefiltert werden, und wobei die Identifizierungsnummer(n) desjenigen oder derjenigen der Transponder, der oder die den Filterkriterien genügen, als erfasste Transponder an die Steuerungseinrichtung gemeldet wird oder werden. Durch dieses Verfahren ist eine eindeutige Identifikation des nächstliegenden Transponders auch in einer dichtgepackten Umgebung gewährleistet. Für die Filterung von Überreichweiten muss dabei nicht auf die Logik einer Prozesssteuerung oder auf manuelle Eingriffe zurückgegriffen werden. Zudem stellt das Verfahren eine generisch nutzbare Lösung für viele Probleme in unterschiedlichen Anwendungsfällen dar.

Sofern nach der ersten Filterung mehr als ein Transponder als im Funkbereich befindlich in Frage kommt, wird erfindungsgemäß eine weitere Verarbeitung vorgenommen, wobei die ermittelten statistischen Größen der verschiedenen Transponder miteinander in Bezug gesetzt bzw. verglichen werden. Dabei soll derjenige Transponder ausgewählt und gemeldet werden, der zumindest hinsichtlich einer Größe bzw. eines Merkmals die anderen Transponder übertrifft. Dabei kann vorteilhaft vorgesehen sein, dass ein Transponder nur dann gemeldet wird, wenn er sich signifikant, also deutlich zumindest hinsichtlich eines Merkmals von den anderen Transpondern unterscheidet, was bedeutet, dass hinsichtlich zumindest eines Merkmals ein "Mindestabstand" zum nächst "schlechteren" Transponder gegeben sein muss.

Die Lösung der Aufgabe sieht außerdem ein Schreib-Lesegerät zum Einsatz in einer Anordnung mit einer Mehrzahl berührungslos auslesbarer Transponder vor, wobei das Schreib-Lesegerät zur Ausführung des vorstehend beschriebenen Verfahrens ausgebildet ist. Mit diesem Schreib-Lesegerät lassen sich diejenigen Vorteile realisieren, die bereits anhand des Verfahrens beschrieben wurden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Schreib-Lesegerät. Die vorteilhaften Ausgestaltungen können sowohl einzeln, als auch in freier Kombination miteinander angewendet werden.

In einer vorteilhaften Ausgestaltung wird genau ein Transponder als "erfasst" an die Steuerungseinrichtung gemeldet. Sofern mehrere Transponder in Frage kommen oder überhaupt kein Transponder ermittelt werden kann, soll eine Meldung unterbleiben und vorteilhaft eine Fehlermeldung ausgegeben werden. Dies bewirkt, dass eine angeschlossene Steuerungseinrichtung immer mit einem eindeutigen Zuordnungsergebnis arbeiten kann, ohne eine nachträgliche Filterung vornehmen zu müssen.

Als Grenzwerte für die Filterkriterien und auch für die beschriebenen Mindestabstände hinsichtlich der Merkmale können Werte manuell administriert werden, alternativ jedoch auch durch "einlernen" in einem Probebetrieb festgelegt werden. Die statistischen Größen können dazu beispielsweise auch mittels eines trainierten neuronalen Netzes ausgewertet werden.

Ausführungsbeispiele des erfindungsgemäßen Verfahrens werden nachfolgend anhand der Zeichnungen erläutert. Sie dienen gleichzeitig der Erläuterung eines erfindungsgemäßen Schreib-Lesegerätes.

Dabei zeigt:

Figur 1    schematisch eine Anordnung mit einem Schreib-Lesegerät und vier Transpondern in einem Funkbereich, und

Figur 2    schematisch die in einem Schreib-Lesegerät gespeicherten Merkmale bei der Erfassung von Transpondern bei mehreren Erfassungsvorgängen ("Inventories").

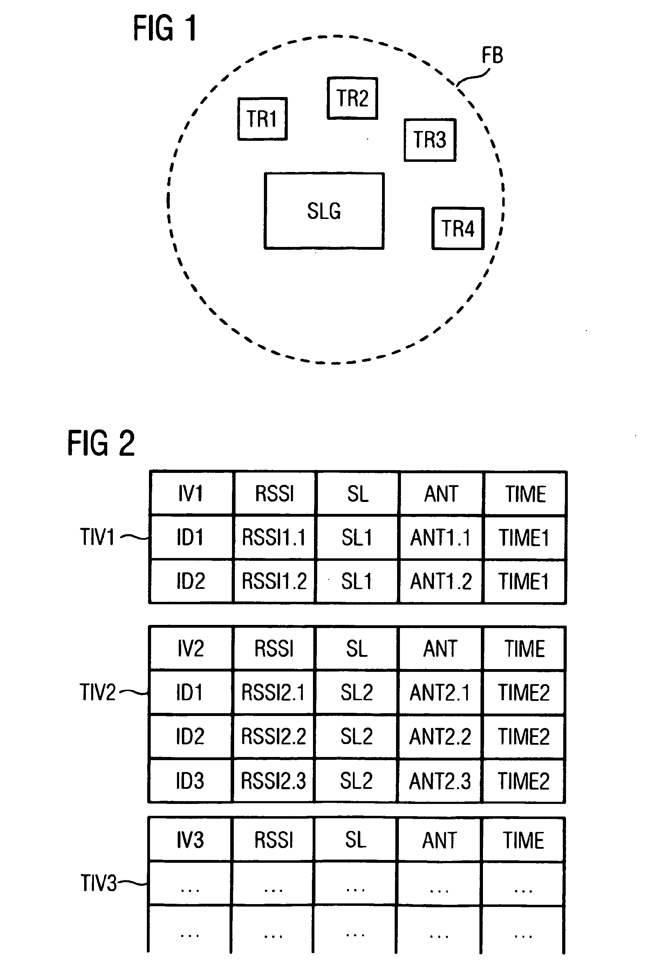

In der Figur 1 ist schematisch ein Schreib-Lesegerät SLG dargestellt, in dessen maximalem Funkbereich FB die Transponder TR1, ..., TR4 angeordnet sind.

Im Folgenden soll anhand der Figur 2 erläutert werden, wie ein Transponder TR1, ..., TR4 als dem Schreib-Lesegerät SLG nächstliegend identifiziert wird, um dessen Identifikationsnummer ID1, ..., ID4 an eine (nicht dargestellte) Steuerungseinrichtung einer Verarbeitungsstation o.ä. zu melden.

Zunächst führt das Schreib-Lesegerät während einer Erkennungsphase fortlaufend Erkennungsvorgänge, sog. "Inventories", durch, bei denen jeweils alle im Funkbereich FB befindlichen Transponder TR1, ..., TR4 erfasst werden. Diese Erkennungsphase kann einen festgelegten Zeitraum andauern; alternativ kann auch die Anzahl der Erkennungszyklen (Inventiories) festgelegt sein.

Bei jedem der "Inventiories" werden dabei zu jedem erfassten Transponder TR1, ..., TR4 als Zusatzangaben sog. Merkmale erfasst und gespeichert, die beispielsweise in einer Tabelle, wie in der Figur 2 dargestellt oder auf eine andere Art und Weise im Schreib-Lesegerät gespeichert werden. Dabei ist in der Figur 2 ein Beispiel dargestellt, bei dem drei Inventories IV1, IV2, IV3 durchgeführt worden sind, wobei drei Tabellen TIV1, TIV2, TIV3 mit den Merkmalen angelegt worden sind. Exemplarisch sind hier als Merkmale jeweils ein Zeitstempel TIME des Empfangs der jeweiligen Antwortnachricht des Transponders TR1, ..., TR4 und damit des Inventories, ein aktueller Empfangspegel RSSI (Received Signal Strange Indication), eine Sendeleistung SL und die beim Empfang benutzte Antenne ANT erfasst worden; im vorliegenden Beispiel wird dazu angenommen, dass drei Antennen ANTx.1, ANTx.2 und ANTx.3 verwendet werden. Jeweils in einer vorteilhaften Variante können, insbesondere zum Einsparen von Speicherplatz und zur Erleichterung einer späteren Verarbeitung, die Angaben (Merkmale) auch zusammengefasst bzw. aggregiert werden, beispielsweise, indem für jeden der Transponder TR1, ..., TR4 nur zwei Zeitstempel TIME, nämlich derjenige der ersten und derjenige der letzten Erfassung des jeweiligen Transponders TR1, ..., TR4 gespeichert wird, oder nur die absolute Anzahl von Inventiories, in welchen der Transponder erkannt wurde, oder nur den jeweils minimalen und maximalen RSSI-Wert und den durchschnittlichen RSSI-Wert etc.

Nach Ablauf der Erkennungsphase (Erfassungsphase) wird eine Auswertung der gesammelten Daten durchgeführt; in einer Ausgestaltung kann die Auswertung aber auch schon während der Erkennungsphase beginnen. Dies geschieht vorteilhaft jedoch nur, wenn während des oben genannten Zeitraums eine ausreichende Anzahl von Inventories IV1, IV2, IV3 durchgeführt werden konnte; anderenfalls sind die Daten (Merkmale) statistisch nicht sicher auswertbar. Die erfassten Daten werden nun derart statistisch ausgewertet, dass statistische Größen als Kennwerte für die Güte der Erkennung der einzelnen Transponder TR1, ..., TR4 gebildet werden. Wichtige Größen sind z.B.:

- Varianz des RSSI-Werts
$$\sigma = \sum_k \left( RSSI(k) - RSSI_{mean} \right)^2$$

- Quadratisches Fehlermaß
$$e = \sqrt{\sum_k \left( RSSI(k+1) - RSSI(k) \right)^2}$$

- Durchschnittliches Verhältnis von RSSI zu Sendeleistung

- Längste Sequenz von Inventories, in welchen der Transponder erkannt wurde

usw.

Bei einer variablen Anzahl von Inventories, die der Auswertung zugrunde gelegt wird, kann es sinnvoll sein, die Varianz oder das quadratische Fehlermaß durch die Anzahl der Inventories k zu dividieren.

Für die bei der Auswertung betrachteten Größen sind im Schreib-Lesegerät jeweils Grenzwerte festgelegt, wobei ein Transponder TR1, ..., TR4 nur dann als sicher erfasst gilt, wenn alle Größen den jeweiligen Grenzwert überschreiten. In einer alternativen Ausführungsform kann das Schreib-Lesegerät auch derart programmiert sein, dass nur für ausgewählte der Größen ein Grenzwert überschritten werden muss; sowohl die Auswahl, welche Größen "erfüllt sein müssen, als auch die Grenzwerte können alternativ zur manuellen Festlegung auch durch Lernphasen ("Teach-Ins") eingelernt bzw. trainiert werden. Dazu können im konkreten Anwendungsfall sog. "Test-Szenarien" arrangiert werden, wobei sich das Schreib-Lesegerät automatisch derart einstellt und dabei die Grenzwerte (Schwellwerte) festlegt, dass nur ein bestimmter der testweise eingesetzten Transponder TR1, ..., TR4 ausgefiltert und gemeldet wird.

Die genannten Grenzwerte stellen also ein Filterkriterium dar, welches individuell auf jede erfasste Größe eines jeden erfassten Transponders TR1, ..., TR4 angewendet wird. Neben den absoluten Filterkriterien ist es zusätzlich oder alternativ auch möglich, relative Filterkriterien einzusetzen. Dies bedeutet, dass jeweils der Transponder TR1, ..., TR4 mit dem besten "Gütemaß" gewählt wird. Im Idealfall weist derjenige Transponder TR1, ..., TR4, welcher sich dem Schreib-Lesegerät bzw. dessen Antenne(n) am nächsten befindet, für alle Größen den besten Wert auf. Es sind jedoch auch Auswerte-Szenarien denkbar, bei denen der erfasste, gültige Transponder TR1, ..., TR4 nur in der überwiegenden Anzahl von Größen besser sein soll, als die anderen Transponder TR1, ..., TR4.

Zusätzlich zu den genannten Filterkriterien kann bestimmt werden, dass ein sog. "Mindestabstand" bezüglich der genannten Größen zwischen den Transpondern TR1, ..., TR4 vorhanden sein muss. In diesem Fall gilt, dass nur dann, wenn bezüglich zumindest einer der statistischen Größen zwischen dem "besten" und dem "zweitbesten" der Transponder TR1, ..., TR4 ein minimaler absoluter oder relativer Unterschied vorhanden ist, der favorisierte Transponder TR1, ..., TR4 ausgewählt und an die Steuerungseinrichtung gemeldet wird. Prinzipiell können sich auch mehrere Transponder TR1, ..., TR4 tatsächlich im näheren Umfeld der Antenne oder der Anntennen des Schreib-Lesegerätes SLG befinden. In einem solchen Fall können richtiger Weise auch mehrere Transponder TR1, ..., TR4 an eine Steuerungseinrichtung gemeldet werden. Das Schreib-Lesegerät SLG kann jedoch in einem solchen Fall alternativ auch eine Fehlermeldung ausgeben, so dass nur dann eine tatsächliche Meldung erfolgt, wenn nur genau einer der Transponder TR1, ..., TR4 als Ergebnis des Filterungs- und Auswahlprozesses feststeht.

Im Folgenden soll beispielhaft derjenige Fall diskutiert werden, in welchem die Transponder TR1 und TR2 im Funkbereich FB des Schreib-Lesegerätes SLG aufgefunden werden. Dabei ist RSSI_mean der Mittelwert der Empfangsfeldstärke-werte des jeweiligen Transponders TR1, ..., TR4. Für die Konfiguration des Schreib-Lesegerätes SLG gilt Folgendes:

- Filterkriterium: RSSI_mean > 85 und e < 1,0
- Mindestabstand: a_RSSI_mean > 5, a_e > 0,1

In einem ersten Fall werden in einer Auswertephase folgende statistische Größen ermittelt:

- RSSI_mean(TR1) = 86, e(TR1) = 0,99;
- RSSI_mean(TR2) = 84, e(TR2) = 1,1

Dies bedeutet:

TR1 genügt dem Grenzwert, TR2 jedoch nicht. Der Minimalabstand zwischen den Transpondern TR1, TR2 (RSSI_mean(TR1) - RSSI_mean(TR2) < a_RSSI_mean) ist unterschritten. Damit ist keiner der Transponder TR1, TR2 gültig, so dass eine Fehlermeldung ausgegeben bzw. ein Fehlercode an die Steuerungseinrichtung übermittelt wird.

In einem zweiten Fall der gleichen Konstellation gilt für die bei der Auswertung ermittelten statistischen Größen:

- RSSI_mean(TR1) = 110, e(TR1) = 0,7;
- RSSI_mean(TR2) = 95, e(TR2) = 0,8

Hier genügen beide Transponder TR1, TR2 den Grenzwerten, so dass mehr als ein Transponder TR1, TR2 als gültig ermittelt wird, so dass ebenfalls ein Fehler ausgegeben wird. Prinzipiell kann in einem solchen Fall das Filterkriterium so erweitert werden, das immer derjenige Transponder TR1, TR2 gewählt wird, der das beste "Gütemaß" (beispielsweise RSSI-Mittelwert) aufweist, in diesem Fall also der Transponder TR1.

In einem dritten Fall derselben Konstellation gilt für die ermittelten Statistischen Größen:

- RSSI_mean(TR1) = 110, e(TR1) = 0,7;
- RSSI_mean(TR2) = 78, e(TR2) = 0,9

Hier genügt nur der Transponder TR1 dem Grenzwert, außerdem ist der Mindestabstand zwischen TR1 und TR2 erfüllt. Damit erfüllt genau ein Transponder die Filterkriterien, so dass der Transponder TR1 als "erfasst" an die Steuerungseinrichtung gemeldet wird.

**Patentansprüche**

1. Verfahren für ein Schreib-Lesegerät (SLG) in einer Anordnung mit einer Mehrzahl berührungslos auslesbarer Transponder (TR1, ..., TR4),
   wobei jeder der Transponder (TR1, ..., TR4) eine eindeutige Identifizierungsnummer (ID1, ..., ID3) aufweist,

wobei das Schreib-Lesegerät (SLG) mit einer industriellen Steuerungseinrichtung verbunden ist,
wobei in einer Erkennungsphase mehrere der Transponder (TR1, ..., TR4) von dem Schreib-Lesegerät (SLG) erfasst werden, wobei in der Erkennungsphase zumindest zwei der Transponder (TR1, ..., TR4) mehrfach erfasst werden,
**dass** bei jeder Erfassung jedes Transponders (TR1, ..., TR4) jeweils die Identifizierungsnummer (ID1, ..., ID3) und eine Anzahl von Merkmalen (RSSI, SL, ANT, TIME) über die Erfassung registriert werden,
wobei in einer Auswertephase für jeden der erfassten Transponder (TR1, ..., TR4) die Merkmale (RSSI, SL, ANT, TIME) jeweils statistisch ausgewertet werden,
wobei für jeden der Transponder (TR1, ..., TR4) statistische Größen ermittelt werden,
wobei die ermittelten statistischen Größen der Transponder (TR1, ..., TR4) jeweils anhand Filterkriterien gefiltert werden, und
wobei die Identifizierungsnummer(n) (ID1, ..., ID3) desjenigen oder derjenigen der Transponder (TR1, ..., TR4), der oder die den Filterkriterien genügen, als erfasste Transponder (TR1, ..., TR4) an die Steuerungseinrichtung als erfasst gemeldet wird oder werden,
**dadurch gekennzeichnet,**
**dass** in den Fällen, in denen die ermittelten statistischen Größen von mehr als einem Transponder (TR1, ..., TR4) den Filterkriterien genügen, die ermittelten statistischen Größen dieser Transponder (TR1, ..., TR4) miteinander in Bezug gesetzt oder verglichen werden, wobei derjenige der Transponder (TR1, ..., TR4) an die Steuerungseinrichtung gemeldet wird, dessen ermittelte statistische Größen zumindest bezüglich eines der Filterkriterien diejenigen der anderen Transponder (TR1, ..., TR4) übertreffen.

2. Verfahren nach Patentanspruch 1,
**dadurch gekennzeichnet,**
**dass** genau einer der erfassten Transponder (TR1, ..., TR4) als erfasst an die Steuerungseinrichtung gemeldet wird.

3. Verfahren nach einem der Patentanspruch 1 oder 2,
**dadurch gekennzeichnet,**
**dass** vor der Meldung überprüft wird, ob zwischen den ermittelten statistischen Größen des zu meldenden Transponders (TR1, ..., TR4) und der anderen erfassten Transponder (TR1, ..., TR4) zumindest hinsichtlich eines der Filterkriterien ein Mindestabstand erfüllt ist, wobei die Meldung anderenfalls unterbleibt.

4. Schreib-Lesegerät (SLG) zum Einsatz in einer Anordnung mit einer Mehrzahl berührungslos auslesbarer Transponder (TR1, ..., TR4),
**dadurch gekennzeichnet,**
**dass** das Schreib-Lesegerät (SLG) zur Ausführung eines der vorstehend beschriebenen Verfahren ausgebildet ist.


**Claims**

1. Method for a read/write unit (SLG) in a configuration with multiple contactlessly readable transponders (TR1, ..., TR4), each of the transponders (TR1, ..., TR4) having a unique identification number (ID1, ..., ID3),
the read/write unit (SLG) being connected to an industrial control device,
in a recognition phase, a plurality of the transponders (TR1, ..., TR4) being detected by the read/write unit (SLG),
in the recognition phase at least two of the transponders (TR1, ..., TR4) being detected repeatedly,
in that during each detection of each transponder (TR1, ..., TR4), in each case the identification number (ID1, ..., ID3) and a number of features (RSSI, SL, ANT, TIME) relating to the detection are registered,
in an evaluation phase, for each of the transponders (TR1, ..., TR4) detected, the features (RSSI, SL, ANT, TIME) being respectively evaluated statistically,
statistical variables being determined for each of the transponders (TR1, ..., TR4),
the statistical variables determined for the transponders (TR1, ..., TR4) respectively being filtered by using filter criteria, and
the identification number(s) (ID1, ... ID3) of that or those of the transponders (TR1, ..., TR4) which meet the filter criteria being reported to the control device as detected transponder(s) (TR1, ..., TR4),
**characterized in that**
in the cases in which the statistical variables determined from more than one transponder (TR1, ..., TR4) satisfy the filter criteria, the statistical variables determined from these transponders (TR1, ..., TR4) are related or compared with one another, that one of the transponders (TR1, ..., TR4) of which the statistical variables determined surpass those of the other transponders (TR1, ..., TR4), at least with respect to one of the filter criteria, being reported to the control device.

2. Method according to Patent Claim 1,
**characterized in that**
exactly one of the transponders (TR1, ..., TR4) detected is reported to the control device as detected.

3. Method according to either of Patent Claims 1 and 2,
**characterized in that**
before the reporting, a check is made as to whether a minimum distance between the statistical variables determined from the transponder (TR1, ..., TR4) to be reported and the other transponders (TR1, ..., TR4) detected, at least with regard to one of the filter criteria, is satisfied, the report otherwise being suppressed.

4. Read/write unit (SLG) for use in a configuration with multiple contactlessly readable transponders (TR1, ..., TR4),
**characterized in that**
the read/write unit (SLG) is designed to implement one of the above-described methods.

**Revendications**

1. Procédé pour un appareil ( SLG ) d'écriture - lecture dans un agencement ayant une multitude de transpondeurs ( TR1, ..., TR4 ) lisibles sans contact,
dans lequel chacun des transpondeurs ( TR1, ..., TR4 ) a un numéro ( ID1, ..., ID3 ) d'identification univoque,
dans lequel l'appareil ( SLG ) d'écriture - lecture est relié à un dispositif de commande industriel,
dans lequel, dans une phase de reconnaissance, plusieurs des transpondeurs ( TR1, ..., TR4 ) sont détectés par l'appareil ( SLG ) d'écriture - lecture,
dans lequel, dans la phase de reconnaissance, au moins deux des transpondeurs ( TR1, ..., TR4 ) sont détectés plusieurs fois,
en ce qu'à chaque détection de chaque transpondeur ( TR1, ..., TR4 ), respectivement les numéros ( ID1, ..., ID3 ) d'identification et un certain nombre de caractéristiques ( RSSI, SL, ANT, TIME ) sont enregistrés par la détection,
dans lequel, dans une phase d'exploitation, on exploite statistiquement, pour chacun des transpondeurs ( TR1, ..., TR4 ) détectés, les caractéristiques ( RSSI, SL, ANT, TIME ),
dans lequel on détermine des grandeurs statistiques pour chacun des transpondeurs ( TR1, ..., TR4 ),
dans lequel on filtre les grandeurs statistiques déterminées des transpondeurs ( TR1, ..., TR4 ) respectivement au moyen de critères de filtrage, et
dans lequel on annonce, comme détecté ( s ), au dispositif de commande comme transpondeurs (TR1, ..., TR4) détectés, le ou les numéros ( ID1, ..., ID3 ) d'identification du ou des transpondeurs ( TR1, ..., TR4 ) qui satisfait ou satisfont aux critères de filtrage,
**caractérisé**
**en ce que**, dans les cas dans lesquels les grandeurs statistiques déterminées de plus qu'un transpondeur ( TR1, ..., TR4 ) satisfont les critères de filtrage, on met en relation entre elles ou on compare les grandeurs statistiques déterminées de ces transpondeurs ( TR1, ..., TR4 ), en indiquant, au dispositif de commande, celui des transpondeurs ( TR1, ..., TR4 ) dont les grandeurs statistiques déterminées dépassent, au moins en ce qui concerne l'un des critères de filtrage, celles des autres transpondeurs ( TR1, ..., TR4 ).

2. Procédé suivant la revendication 1,
**caractérisé**
**en ce que** l'on annonce au dispositif de commande, comme détecté, exactement l'un des transpondeurs ( TR1, ..., TR4 ) détectés.

3. Procédé suivant l'une des revendications 1 ou 2, **caractérisé**
**en ce que** l'on contrôle, avant l'annonce, s'il est satisfait un écart maximum, au moins en ce qui concerne l'un des critères de filtrage, entre les grandeurs statistiques déterminées du transpondeur ( TR1, ..., TR4 ) à annoncer et les autres transpondeurs ( TR1, ..., TR4 ) détectés, l' annonce étant sinon supprimée.

4. Appareil ( SLG ) d'écriture - lecture à utiliser dans un agencement ayant une multitude de transpondeurs ( TR1, ..., TR4 ) lisibles sans contact,
**caractérisé**
**en ce que** l'appareil ( SLG ) d'écriture - lecture est constitué pour la mise en oeuvre de l'un des procédés décrits ci-dessus.

EP 2 562 676 B1

## FIG 1

## FIG 2

| IV1 | RSSI | SL | ANT | TIME |
|---|---|---|---|---|
| ID1 | RSSI1.1 | SL1 | ANT1.1 | TIME1 |
| ID2 | RSSI1.2 | SL1 | ANT1.2 | TIME1 |

TIV1

| IV2 | RSSI | SL | ANT | TIME |
|---|---|---|---|---|
| ID1 | RSSI2.1 | SL2 | ANT2.1 | TIME2 |
| ID2 | RSSI2.2 | SL2 | ANT2.2 | TIME2 |
| ID3 | RSSI2.3 | SL2 | ANT2.3 | TIME2 |

TIV2

| IV3 | RSSI | SL | ANT | TIME |
|---|---|---|---|---|
| ... | ... | ... | ... | ... |
| ... | ... | ... | ... | ... |

TIV3

**IN DER BESCHREIBUNG AUFGEFÜHRTE DOKUMENTE**

**In der Beschreibung aufgeführte Patentdokumente**

• WO 2009055839 A1, Laviale